# EUROPÄISCHE PATENTSCHRIFT

(11) **EP 0 982 805 B1**
(45) Veröffentlichungstag und Bekanntmachung des Hinweises auf die Patenterteilung: **13.11.2002**
(21) Anmeldenummer: 99116626.5
(22) Anmeldetag: 25.08.1999
(51) Int. Cl.: H01R 12/10, B60R 16/02

(54) **Elektrisches Verbindungselement**
Electrical connecting device
Dispositif de connexion électrique

(30) Priorität: 26.08.1998 DE 29815351 U
(43) Veröffentlichungstag der Anmeldung: 01.03.2000
(73) Patentinhaber: Delphi Technologies, Inc., Troy, MI 48007 (US)
(72) Erfinder: Felgenhauer, Reinhard, 58636 Iserlohn (DE); Lamberty, Hans, 80993 München (DE)
(74) Vertreter: Manitz, Finsterwald & Partner

(56) Entgegenhaltungen:
- EP-A- 0 534 659
- US-A- 5 314 346
- PATENT ABSTRACTS OF JAPAN vol. 12, no. 212 (M-710), 17. Juni 1988 (1988-06-17) & JP 063 013842 A (HONDA), 21. Januar 1988 (1988-01-21)

## Beschreibung

Die vorliegende Erfindung betrifft ein elektrisches Verbindungselement mit einer Vielzahl von flexiblen elektrischen Leitern, die von einer Isolierungsschicht umgeben sind, wobei im Bereich zwischen den Enden der elektrischen Leiter die Isolierungsschicht zur Bildung zumindest eines Kontaktfensters bereichsweise unterbrochen ist, so daß die elektrischen Leiter in diesen Bereichen freiliegen und jeweils durch das Kontaktfenster von außen zugänglich sind.

Verbindungselemente dieser Art werden überall dort verwendet, wo elektrische Bauelemente miteinander verbunden werden. So werden beispielsweise im Kraftfahrzeugbereich elektronische Bauelemente durch vorzugsweise als Flachbandkabel ausgebildete Leiter verbunden, da durch die flache Bauweise und die nebeneinander angeordneten Einzelleitungen eine platzsparende und übersichtliche Verlegung der Verbindungselemente gewährleistet ist.

Da üblicherweise mittels der Verbindungselemente ein langer Strang von elektrischen Leitungen gebildet wird, der meist eine Vielzahl von Abzweigungen besitzt, an deren Enden jeweils elektrisch Paarelemente anzuschließen sind, sind diese Enden üblicherweise mit Steckverbindungen versehen, über die die gewünschten Komponenten anschließbar sind.

Weiterhin sind die Leitungsstränge oftmals in einzelne Bereiche unterteilt, die ebenfalls über Steckverbindungen miteinander verbunden sind, um bei Beschädigung einer Leitung im Wartungsfall den entsprechenden beschädigten Teilbereich problemlos austauschen und durch einen neuen entsprechenden Teilstrang ersetzen zu können.

Nachteilig ist daran, daß nur für den relativ unwahrscheinlich auftretenden Fehlerfall Steckverbindungen vorgesehen werden müssen, durch die die Gesamtkosten des verwendeten Leitungsstranges erhöht werden. Da jedoch im Falle eines Defektes ohne entsprechende Steckverbindungen der gesamte Leitungsstrang ausgetauscht werden muß, werden die erwähnten Steckverbindungen üblicherweise trotz der damit verbundenen höheren Kosten in Kauf genommen.

Aus der JP-A-63013842 ist ein elektrisches Verbindungselement gemäß dem Oberbegriff des Anspruchs 1 bekannt. Der elektrische Leiter ist bei diesem Verbindungselement bereichsweise als Schmelzsicherung ausgebildet und in seiner Gesamtheit in den das Innere eines Armaturenbrettes ausfüllenden Kunststoffschaum eingebettet. Um beim Schmelzen der Sicherung die unterbrochenen Leiter wieder verbinden zu können, ist in dem Armaturenbrett eine Öffnung vorgesehen, durch die im Bedarfsfall die unterbrochenen elektrischen Leiter durch eine separate Ersatzsicherung überbrückt werden können.

Es ist eine Aufgabe der Erfindung, ein elektrisches Verbindungselement der eingangs genannten Art so auszubilden, daß die Herstellungskosten verringert werden können und trotzdem im Fehlerfall nicht das gesamte Verbindungselement ausgetauscht werden muß, wobei ein sicherer Schutz gegen eine Beschädigung der elektrischen Leiter und gegen Kurzschlüsse gewährleistet sein soll.

Ausgehend von einem elektrischen Verbindungselement der eingangs genannten Art wird diese Aufgabe erfindungsgemäß dadurch gelöst, daß das Kontaktfenster durch eine lösbare Schutzabdeckung verschlossen ist und daß die Schutzabdeckung mit der Isolierungsschicht und/oder mit den freiliegenden elektrischen Leitern verklebt, insbesondere selbstklebend ausgebildet ist.

Erfindungsgemäß wird somit der Tatsache Rechnung getragen, daß der beschriebenen Fehlerfall, nämlich die Beschädigung eines Teilstückes eines entsprechenden Leitungsstrangs, relativ selten auftritt. Bei dem erfindungsgemäß ausgebildeten elektrischen Verbindungselement wird daher auf eine Aufteilung in separate Teilstränge, die jeweils mit separaten Steckverbindungen miteinander verbunden sind, verzichtet, so daß die Kosten für entsprechende Steckverbindungen entfallen.

An Stelle der Verbindungsstecker werden an den entsprechenden Stellen des Verbindungselements jeweils Bereiche vorgesehen, an denen die Isolierungsschicht unterbrochen ist. Diese Bereiche bilden Kontaktfenster, in denen die elektrischen Leiter freiliegen und von außen zugänglich sind.

Im Bedarfsfall, d. h. bei Beschädigung eines oder mehrerer Leiter des Verbindungselementes und/oder wenn eine neue elektrische Komponente an das vorhandene Verbindungselement angeschlossen werden soll, kann eine Kontaktierung eines neuen Teilstranges bzw. direkt der neuen Komponente mit den freiliegenden Bereichen der Leiter jeweils durch das Kontaktfenster hindurch erfolgen.

Eine solche Kontaktierung kann beispielsweise durch einen Lötvorgang, einen Krimpvorgang oder eine sonstige geeignete Verbindungstechnik erfolgen.

Die beschädigten Teile des Verbindungselementes können von dem unbeschädigten Teil abgetrennt, beispielsweise abgeschnitten werden. Grundsätzlich ist es auch möglich, daß das beschädigte Teil mit dem unbeschädigten Teil verbunden bleibt, falls hierdurch kein Beeinträchtigung der Funktion erfolgt.

Durch die lösbare Schutzabdeckung wird gewährleistet, daß die erfindungsgemäß freiliegenden elektrischen Leiter zum einen vor Beschädigungen geschützt sind und zum anderen Kurzschlüsse, die durch eine ungewollte Verbindung der freiliegenden Leiterbereiche untereinander oder beispielsweise mit Karosserieteilen entstehen können, vermieden werden. Die Schutzabdeckung ist als insbesondere flexible Schutzfolie ausgebildet, die mit der Isolierungsschicht und/oder mit den freiliegenden elektrischen Leitern verklebt, insbesondere selbstklebend ausgebildet ist. Im Wartungsfall kann durch einfaches Abziehen der lösbaren Schutzabdeckung das Kontaktfenster freigegeben werden, so daß die Kontaktierung der elektrischen Leiter durch das Kontaktfenster hindurch problemlos möglich ist.

Nach einer vorteilhaften Ausführungform der Erfindung sind die elektrischen Leiter als gedruckte Leiterbahnen ausgebildet. Gerade im Druckverfahren hergestellte Leiterbahnen werden beispielsweise im Kfz-Bereich oder innerhalb elektronischer Komponenten häufig verwendet, da sie zum einen sehr einfach und kostengünstig herstellbar sind und zum anderen aufgrund ihrer Flexibilität und geringen Dicke gut verlegbar sind und wenig Platz beanspruchen.

Da die Leiterbahnen bei gedruckten Leitern in die aus Kunststoff bestehende Isolierungsschicht eingegossen sind, ist gerade bei diesen Elementen eine nachträgliche Abisolierung praktisch nicht möglich. Erfindungsgemäß ist es auch bei solchen gedruckten Leitern möglich, durch die vorbereiteten Kontaktfenster nachträglich die gedruckten Leiterbahnen zu kontaktieren und somit im Fehlerfall oder im Falle einer erforderlichen Nachrüstung weitere Leiterbahnen oder elektronischen Komponenten an die gedruckten Leiterbahnen anzuschließen.

Nach einer weiteren vorteilhaften Ausführungsform der Erfindung sind am und/oder zwischen den Enden der elektrischen Leiter elektronische Bauelemente und/oder Kopplungselemente angeschlossen. Die Erfindung ist somit nicht nur bei reinen passiven Verbindungselementen einsetzbar, sondern kann auch auf Verbindungselemente angewandt werden, in die elektronische Bauelemente, wie beispielsweise Anzeigeelemente, Beleuchtungselemente, Schalter, Steckverbindungen oder dergleichen, integriert sind.

Durch die erfindungsgemäßen Kontaktfenster ist es möglich, auch bei Defekt solcher Bau- oder Kopplungselemente diese defekten Elemente aus dem Leitungsstrang herauszutrennen, beispielsweise den entsprechenden Teilleitungsstrang abzuschneiden, und das defekte Bauelement durch ein funktionsfähiges neues Element zu ersetzten.

Weitere vorteilhafte Ausführungsformen der Erfindung sind in den Unteransprüchen angegeben.

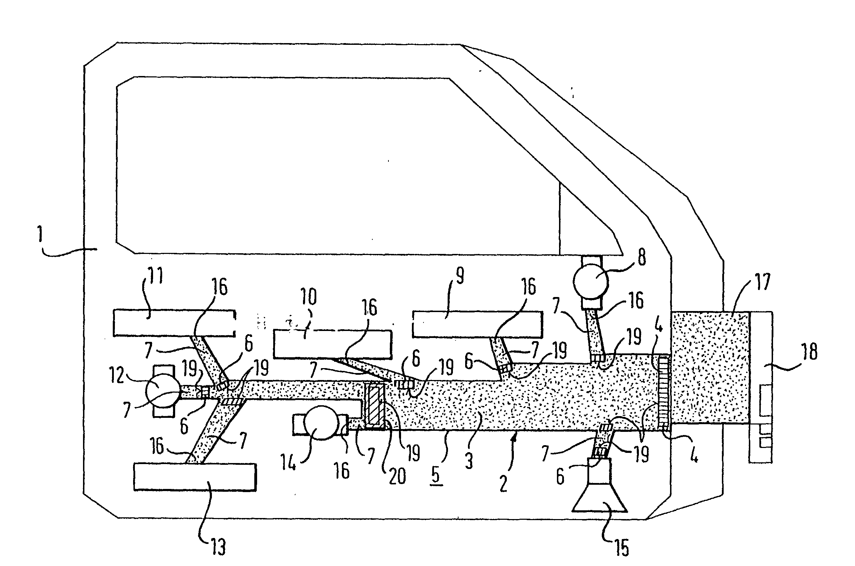

Die Erfindung wird nachfolgend anhand eines Ausführungsbeispiels unter Bezugnahme auf die einzige Figur näher erläutert.

Die Figur zeigt eine Kraftfahrzeugtür 1, bei der die Innenverkleidung entfernt ist, so daß in schematischer Darstellung die Verkabelung von in der Kraftfahrzeugtür 1 angeordneten elektrischen Komponenten zu erkennen ist.

Die Verkabelung umfaßt ein als gedruckte Leiterbahn ausgebildetes, flexibles elektrisches Verbindungselement 2, das aus einer Vielzahl von auf eine Isolierungsschicht 3 aufgedruckten Leiterbahnen 4, 6 besteht.

Die gedruckten Leiterbahnen 4, 6 sind dabei im wesentlichen vollflächig von der Isolierungsschicht 3 umhüllt, so daß weder eine Kurzschluß zwischen zwei benachbarten Leiterbahnen 4, 6 noch zwischen einer Leiterbahn 4, 6 und beispielsweise der Kraftfahrzeugtür 1 möglich ist.

Das flexible elektrische Verbindungselement 2 umfaßt einen die Leiterbahnen 4 umfassenden Hauptstrang 5, von dem aus eine Vielzahl von die Leiterbahnen 6 umfassenden Nebensträngen 7 zu elektrischen Komponenten 8 bis 15 führt. Als Beispiele für entsprechende elektrische Komponenten sind in der Figur ein Elektromotor 8 für einen elektrisch verstellbaren Außenspiegel, ein Schalterblock 9 zur Betätigung beispielsweise der Zentralverriegelung oder von elektrischen Fensterhebern, ein Seitenairbag 10, ein Türschloß 11, ein Motor 12 für die Zentralverriegelung, eine Beleuchtungseinheit 13, ein Elektromotor 14 für elektrische Fensterheber und ein Lautsprecher 15 schematisch dargestellt, wobei jeweils die Enden 16 der Nebenstränge 7 mit den Komponenten 8 bis 15 verbunden sind.

Das Ende 17 des Hauptstranges 5 ist mit eines Türkupplung 18 verbunden, über die das elektrische Verbindungselement 2 und damit die elektrischen Komponenten 8 bis 15 mit entsprechenden im Kraftfahrzeug angeordneten Komponenten, wie beispielsweise Batterie, Soundsystem, Bordcomputer und so weiter verbunden werden kann.

In der Isolierungsschicht 3 des elektrischen Verbindungselements 2 ist eine Vielzahl von freie Bereiche definierenden Kontaktfenstern 19 ausgebildet, die insbesondere im Bereich des jeweiligen Abzweigungspunktes zwischen dem Hauptstrang 5 und den Nebensträngen 7 angeordnet sind. Die Kontaktfenster 19 bilden Aussparungen auf zumindest einer Seite des elektrischen Verbindungselement 2 und zwar insbesondere auf dessen nach Abnahme der Türverkleidung zugänglicher Seite.

Durch die Kontaktfenster 19 sind die Leiterbahnen 4, 6 von außen zugänglich, so daß im Bedarfsfall, beispielsweise bei Beschädigung einer der Nebenstränge 7, ein Ersatznebenstrang 7 mit den freiliegenden Leiterbahnen 4, 6 elektrisch leitend verbunden werden kann. Diese Verbindung kann beispielsweise durch einen Lötvorgang, einen Krimpvorgang oder einen ähnlichen geeigneten Verbindungsvorgang erfolgen.

Um einen versehentlichen Kurzschluß durch einen Kontakt der durch das jeweilige Kontaktfenster 19 freiliegenden Leiterbahnen 4, 6 beispielsweise mit einem innerhalb der Kraftfahrzeugtür 1 angeordneten Metallteil zu verhindern, sind die Kontaktfenster 19 mit beispielsweise als selbstklebende, flexible Schutzfolie ausgebildeten Schutzabdeckungen 20 verschlossen. Eine solche Schutzabdeckung 20 ist in der Figur beispielhaft schraffiert dargestellt. In ähnlicher Weise können auch die übrigen Kontaktfenster 19 mit Schutzabdeckungen versehen sein.

Ist beispielsweise einer der Nebenstränge 7 beschädigt, so kann er von dem Hauptstrang 5 abgetrennt, beispielsweise abgeschnitten werden und durch einen neuen Nebenstrang, dessen Ende durch das jeweilige Kontaktfenster 19 hindurch mit den freiliegenden Leiterbahnen 6 verbunden werden kann, ersetzt werden. Das andere Ende des neuen Nebenstranges kann dann beispielsweise eine Steckverbindung aufweisen, mit der dieser in üblicher Weise mit einer der elektrischen Komponenten 8 bis 15 verbunden wird.

In gleicher Weise kann auch der Hauptstrang 5 durch einen neuen Hauptstrang ersetzt werden, falls ein Defekt nicht in einem der Nebenstränge, sondern in dem Hauptstrang 5 auftritt. In diesem Fall kann der neue Hauptstrang über die in den Kontaktfenstern 19 freiliegenden Leiterbahnen 6 sowie die in dem Kontaktfenstern 19 freiliegenden Leiterbahnen 4 mit den elektrischen Komponenten 8 bis 15 sowie mit dem Ende 17 des Hauptstranges 5 kontaktiert werden.

Die erfindungsgemäße Ausbildung des elektrischen Verbindungselementes 2 führt dazu, daß dessen Herstellungskosten deutlich verringert werden können, da die Nebenstränge 7 nicht über relativ teure Verbindungsstekker, sondern in kostengünstiger, einstückiger Ausbildung mit dem Hauptstrang 5 verbunden sind. Tritt während der Lebensdauer des elektrischen Verbindungselementes 2 kein Defekt auf, so werden keine Kosten für unnötige Verbindungsstecker erzeugt. Nur im Falle eines Defektes werden durch Abtrennen des defekten Leitungsstranges und Anschließen eines neuen, funktionsfähigen Leitungsstranges Aufwand und damit Kosten verursacht. Diese sind jedoch aufgrund der erfindungsgemäß vorgesehenen Kontaktfenster 19 relativ gering, so daß die über die Lebensdauer eines entsprechenden elektrischen Verbindungselementes zu erwartenden Gesamtkosten insgesamt deutlich reduziert werden können.

### Bezugszeichenliste

- 1.: Kraftfahrzeugtür
- 2.: elektrisches Verbindungselement
- 3.: Isolierungsschicht
- 4.: gedruckte Leiterbahnen
- 5.: Hauptstrang
- 6.: gedruckte Leiterbahnen
- 7.: Nebenstrang
- 8.: Elektromotor
- 9.: Schalterblock
- 10.: Seitenairbag
- 11.: Türschloß
- 12.: Elektromotor
- 13.: Beleuchtungseinheit
- 14.: Elektromotor
- 15.: Lautsprecher
- 16.: Enden der Nebenstränge
- 17.: Ende des Hauptstranges
- 18.: Türkupplung
- 19.: Kontaktfenster
- 20.: Schutzabdeckung

## Patentansprüche

1. Elektrisches Verbindungselement mit einer Vielzahl von flexiblen elektrischen Leitern (4, 6), die von einer Isolierungsschicht (3) umgeben sind, wobei im Bereich zwischen den Enden (16, 17) der elektrischen Leiter (4, 6) die Isolierungsschicht (3) zur Bildung zumindest eines Kontaktfensters (19) bereichsweise unterbrochen ist, so daß die elektrischen Leiter (4, 6) in diesen Bereichen freiliegen und jeweils durch das Kontaktfenster (19) von außen zugänglich sind,
**dadurch gekennzeichnet,**
**daß** das Kontaktfenster (19) durch eine lösbare Schutzabdeckung (20) verschlossen ist und daß die Schutzabdeckung (20) mit der Isolierungsschicht (3) und/oder mit den freiliegenden elektrischen Leitern (4, 6) verklebt, insbesondere selbstklebend ausgebildet ist.

2. Elektrisches Verbindungselement nach Anspruch 1,
**dadurch gekennzeichnet,**
**daß** die Schutzabdeckung (20) als insbesondere flexible Schutzfolie ausgebildet ist.

3. Elektrisches Verbindungselement nach einem der vorhergehenden Ansprüche,
**dadurch gekennzeichnet,**
**daß** an und/oder zwischen den Enden (16, 17) der elektrischen Leiter (4, 6) elektronische Bauelemente (8, 9, 10, 11, 12, 13, 14, 15) und/oder Kopplungselemente (18) angeschlossen sind.

4. Elektrisches Verbindungselement nach einem der vorhergehenden Ansprüche,
**dadurch gekennzeichnet,**
**daß** die elektrischen Leiter (4, 6) als gedruckte Leiterbahnen ausgebildet sind.

## Claims

1. Electrical connection element with a plurality of flexible electrical conductors (4, 6) which are surrounded by an insulation layer (3), wherein, in the region between the ends (16, 17) of the electrical conductors (4, 6), the insulation layer (3) is interrupted regionally for the forming of at least one contact window (19) such that the electrical conductors (4, 6) are exposed in this region and are in each case accessible from the outside through the contact window (19), **characterised in that** the contact window (19) is closed by a releasable protective covering (20); and **in that** the protective covering (20) is adhesively bonded to the insulation layer (3) and/or to the exposed electrical conductors (4, 6), in particular that the protective covering (20) is made self adhesive.

2. Electrical connection element in accordance with claim 1, **characterised in that** the protective covering (20) is designed as a protective film, in particular as a flexible protective film.

3. Electrical connection element in accordance with any one of the preceding claims, **characterised in that** electronic components (8, 9, 10, 11, 12, 13, 14, 15) and/or coupling elements (18) are connected at and/or between the ends (16, 17) of the electrical conductors (4, 6).

4. Electrical connection element in accordance with any one of the preceding claims, **characterised in that** the electrical conductors (4, 6) are designed as printed conductor paths.

## Revendications

1. Elément de connexion électrique comprenant une pluralité de conducteurs électriques souples (4, 6), qui sont entourés d'une couche isolante (3), dans lequel, dans la zone comprise entre les extrémités (16, 17) des conducteurs électriques (4, 6), la couche isolante (3) est interrompue par zones pour former au moins une fenêtre de contact (19) de sorte que les conducteurs électriques (4, 6) soient libres dans ces zones et soient respectivement accessibles de l'extérieur à travers la fenêtre de contact (19), **caractérisé en ce que** la fenêtre de contact (19) est fermée par un couvercle de protection amovible (20) et **en ce que** le couvercle de protection (20) est collé à la couche isolante (3) et/ou aux conducteurs électriques libres (4, 6), en particulier collé par autocollant.

2. Elément de connexion électrique selon la revendication 1, **caractérisé en ce que** le couvercle de protection (20) se présente sous la forme en particulier d'une feuille de protection souple.

3. Elément de connexion électrique selon l'une quelconque des revendications précédentes, **caractérisé en ce que** des composants électroniques (8, 9, 10, 11, 12, 13, 14, 15) et/ou des éléments de couplage (18) sont connectés sur et/ou entre les extrémités (16, 17) des conducteurs électriques (4, 6).

4. Elément de connexion électrique selon l'une quelconque des revendications précédentes, **caractérisé en ce que** les conducteurs électriques (4, 6) se présentent sous la forme de voies conductrices imprimées.
